Europäisches Patentamt

European Patent Office

Office européen des brevets

(19)

(11) Numéro de publication : **0 354 844 B1**

(12) **FASCICULE DE BREVET EUROPEEN**

(45) Date de publication du fascicule du brevet :
24.06.92 Bulletin 92/26

(51) Int. Cl.⁵ : **C03B 5/235,** F27D 1/04,
F27B 9/30, F27B 3/26,
F28D 17/02

(21) Numéro de dépôt : 89402246.6

(22) Date de dépôt : 09.08.89

(54) **Eléments réfractaires pour la construction de régénérateurs thermiques.**

(30) Priorité : 10.08.88 FR 8810791

(43) Date de publication de la demande :
14.02.90 Bulletin 90/07

(45) Mention de la délivrance du brevet :
24.06.92 Bulletin 92/26

(84) Etats contractants désignés :
AT BE CH DE ES FR GB IT LI LU NL SE

(56) Documents cités :
EP-A- 0 090 455
DE-B- 1 272 325
US-A- 2 839 286

(73) Titulaire : **SOCIETE EUROPEENNE DES
PRODUITS REFRACTAIRES
Les Miroirs 18, Avenue d'Alsace
F-92400 Courbevoie (FR)**

(72) Inventeur : **Zanoli, Alain, Paul, Bernard
Impasse du Voiturier
F-84310 Morieres-lez-Avignon (FR)**
Inventeur : **Recasens, Joseph
420 rue Saint Hubert
F-84700 Sorgues (FR)**

(74) Mandataire : **Colas, Jean-Pierre et al
Cabinet de Boisse 37, avenue Franklin D.
Roosevelt
F-75008 Paris (FR)**

# Description

L'invention concerne des éléments pour la construction de régénérateurs thermiques.

La mise au point de la présente invention a été faite avec la collaboration du Groupement pour la Recherche sur les Echangeurs Thermiques (GRETH), France, pour la réalisation d'essais en simulation.

Dans le brevet français 2.142.624, la demanderesse a décrit un élément réfractaire monolithique empilable, utile notamment pour garnir les chambres de régénération de fours de fusion de verre, constitué d'au moins trois bras rayonnants ou ailes, de forme générale parallélépipédique, solidaires par une de leurs tranches, d'une partie centrale de raccordement, cet élément étant moulé à partir d'un ou plusieurs oxydes réfractaires préalablement fondus et les bras rayonnants ou ailes étant identiques et présentant une épaisseur au plus égale à 50 mm.

De tels éléments comprenant quatre bras rayonnants orthogonaux d'épaisseur constante ont été commercialisés par la demanderesse et continuent à l'être. Ces éléments sont couramment dénommés "cruciformes".

Dans l'addition 2. 248. 748 au brevet précédent, la demanderesse a décrit une variante de réalisation de l'élément du brevet 2. 142. 624, selon laquelle les bras rayonnants ou ailes ont une épaisseur allant en décroissant de leur partie inférieure à leur partie supérieure, afin d'améliorer les échanges thermiques par convection entre l'élément et le fluide (air) à réchauffer.

Le grand avantage de ces éléments "cruciformes" est de faciliter le montage et de permettre avec un seul type d'éléments d'équiper des empilages présentant des canaux de passage pour les gaz et pour l'air de section différente.

DE-B-1 272 325 décrit aussi des éléments de garnissage pour chambres de régénérateur dont la base est plus épaisse que le sommet et dont la paroi présente une forme ondulée de façon que, après empilage de ces éléments, on obtienne des canaux pourvus de reliefs.

Pendant le fonctionnement des chambres d'empilages de régénérateur de four de fusion du verre, les gaz chauds ou fumées qui proviennent du four en fonctionnement entrent dans l'empilage par la partie haute du régénérateur, libérant leur énergie calorifique dans l'empilage puis sont évacués par une cheminée. Pendant ce temps, de l'air froid amené en bas d'un autre empilage chauffé au cours du cycle précédent récupère l'énergie calorifique et sort chaud en haut de l'empilage d'où il est conduit jusqu'aux brûleurs du four de fusion pour assurer la combustion du carburant dans les meilleures conditions de consommation.

Au cours du passage des fumées dans l'empilage, du haut vers le bas, celles-ci non seulement libèrent leur énergie calorifique mais peuvent également, en fonction de la conduite du four et du type de verre fondu, déposer des poussières ou des éléments volatilisés dans le bassin de fusion.

Ces dépôts ont tendance à obstruer les canaux de passage des fumées et de l'air. Pour limiter cet inconvénient éventuel, les éléments "cruciformes" utilisés jusqu'à ce jour tendent à créer des canaux hydrauliquement lisses du fait de la surface plane de leurs ailes et du fait du montage très stable en canaux sans éléments en surplomb.

Par ailleurs, l'optimisation, c'est-à-dire entre autres, l'augmentation du rendement thermique des empilages des régénérateurs, passe par l'augmentation des échanges thermiques entre le fluide à réchauffer et l'empilage du régénérateur. Or, l'augmentation de ces échanges nécessite l'intensification des échanges thermiques dans la phase la plus limitative du cycle, c'est-à-dire la période de passage de l'air. En effet, le coefficient d'échange thermique réfractaire-air (convection) est plusieurs fois plus faible que celui des échanges fumées-réfractaire (rayonnement). Il faut cependant veiller à ce que les moyens mis en oeuvre ne favorisent pas trop les phénomènes de dépôt sur les pièces constituant l'empilage et plus particulièrement dans les zones de condensation.

Il existe donc un besoin pour des éléments perfectionnés destinés à garnir les chambres des régénérateurs de fours de fusion du verre qui tout en minimisant les phénomènes de dépôt lors du passage des fumées dans l'empilage, améliorent les échanges thermiques entre le fluide à réchauffer et l'empilage du régénérateur.

L'invention vise à satisfaire ce besoin en fournissant de nouveaux éléments céramiques perfectionnés pour le garnissage des régénérateurs de fours de fusion du verre.

Plus particulièrement, l'invention concerne un élément céramique pour le garnissage de régénérateurs de fours de fusion du verre, ayant au moins une paroi verticale dont l'épaisseur moyenne est d'au plus 40 mm, caractérisé par la présence, sur les faces opposées de cette paroi verticale, d'une pluralité d'obstacles faisant partie intégrante de l'élément, le décrochement des obstacles par rapport à la surface de base de la paroi étant d'au moins 5 mm, le rapport de la distance séparant deux obstacles consécutifs d'une face donnée dans le sens vertical audit décrochement étant compris entre 3 et 15, et l'angle $x$ formé par l'obstacle avec la surface de base de chaque face de la paroi dans le sens prévu de passage des fumées et l'angle $y$ formé par l'obstacle avec la surface de base de chaque face de la paroi dans le sens prévu de passage de l'air à réchauffer étant tels que $x$ soit inférieur à $y$, les obstacles sur une face de paroi verticale étant décalés dans le sens vertical par rapport aux obstacles sur l'autre face de cette paroi. Par l'expression "surface de base", on entend la surface qui précède on suit chaque obstacle.

Le nouvel élément de l'invention permet d'obtenir une importante amélioration au rendement de la régénération. En effet, les obstacles de surface présents sur les pièces permettent d'intensifier les échanges réfractaires-air en perturbant les écoulements d'air au voisinage des parois préalablement chauffées par les fumées.

Par "épaisseur moyenne" de la paroi, on désigne l'épaisseur d'une paroi à faces planes dépourvues d'obstacles qui présenterait le même volume que la paroi à obstacles de l'invention. Cette épaisseur moyenne doit être inférieure ou égale à 40 mm.

Par "décrochement" des obstacles, on désigne la hauteur maximale de l'obstacle par rapport à la surface de base de la paroi. Ce décrochement doit être d'au moins 5 mm et, de préférence, d'au moins 10 mm.

L'élément céramique peut présenter des formes très diverses. Ils peuvent avoir la forme d'éléments à bras rayonnants ou ailes comme ceux décrits dans le brevet français 2.142.624 précité, en particulier la forme cruciforme préférée à 4 bras rayonnants orthogonaux, mais ils peuvent aussi présenter en section horizontale la forme générale d'un carré creux, d'un hexagone creux, une forme en L ou tout simplement être formés d'une seule paroi.

Selon l'invention, les deux faces de la paroi sont pourvues d'obstacles.

Chaque obstacle peut s'étendre de façon continue sur la largeur de la paroi ou n'occuper qu'une fraction de celle-ci. Dans ce dernier cas, on aura habituellement plusieurs obstacles disposés côte-à-côte mais de façon espacée les uns des autres. Egalement tous ou certain(s) des obstacle(s) peuve(nt) n'être présent(s) qu'en partie sur un élément donné, leur complément se trouvant sur l'élément adjacent disposé au-dessus ou en-dessous dans l'empilage.

Les obstacles présents sur une paroi peuvent être tous de forme identique ou bien on peut utiliser un mélange d'obstacles de formes différentes. La distance séparant dans le sens vertical deux obstacles consécutifs peut être fixe ou variée. L'important est que le rapport de la distance séparant deux obstacles consécutifs dans le sens vertical au décrochement reste compris entre 3 et 15, de préférence entre 5 et 10.

Le respect de cette gamme de rapports permet à la couche limite de l'air, décollée de la paroi par un obstacle, de se recoller à la paroi, c'est-à-dire sur la surface de base, avant d'atteindre l'obstacle suivant. Grâce à cela, l'essentiel de l'intensification de ce transfert thermique se fait à l'arrière de l'obstacle dans le sens du passage de l'air et avant l'obstacle suivant, dans la zone où l'écoulement de cet air détaché de la paroi par l'obstacle vient s'y rattacher.

Selon l'invention, les obstacles sur une face de paroi verticale sont décalés dans le sens vertical par rapport aux obstacles sur l'autre face de cette paroi. En d'autres termes, la paroi vue en section verticale présente un profil asymétrique.

Le décalage des obstacles sur les faces opposées d'une même paroi permet de tirer le meilleur parti de l'intensification du transfert thermique. En effet, il a pour conséquence de positionner les parties les plus épaisses de la paroi en face de la zone de rattachement de l'écoulement d'air. Ainsi, le transfert d'énergie le plus intense se fait aux endroits de la paroi où les capacités calorifiques sont les plus grandes. Le décalage des obstacles a par ailleurs un avantage supplémentaire. A épaisseur moyenne de l'élément équivalent, un élément à obstacles décalés possède en général une résistance mécanique supérieure à un élément à obstacles non décalés (symétriques). Cela résulte du fait que l'élément à obstacles décalés a une épaisseur locale minimale supérieure à celle de la pièce à obstacles non décalés.

Les obstacles peuvent avoir eux-mêmes aussi un profil symétrique ou asymétrique. Ils sont de préférence asymétriques, notamment pour les zones de l'empilage où il peut se produire un dépôt. Le profil des obstacles peut être caractérisé par l'angle $\underline{x}$ qu'il forme avec la surface de la base de la paroi dans le sens de passage des fumées (habituellement de haut en bas de l'élément) et l'angle $\underline{y}$ qu'il forme avec cette même surface dans le sens de passage de l'air à réchauffer (habituellement de bas en haut de l'élément). Selon l'invention, on doit avoir $\underline{x}$ inférieur à $\underline{y}$ de façon que les obstacles offrent à l'écoulement des fumées une surface la plus hydrauliquement lisse possible afin de réduire les dépôts néfastes et offrent à l'écoulement de l'air une surface la plus hydrauliquement rugueuse possible pour améliorer les échanges thermiques et assurer une récupération maximale de la chaleur stockée dans les éléments céramiques au cours du cycle de fonctionnement précédent.

Les éléments de l'invention peuvent être fabriqués par moulage à l'état fondu de compositions céramiques réfractaires habituellement employées pour ce genre d'applications, par exemple de compositions à base d'alumine (par exemple une composition qui comprend, en poids, 87,5% d'alumine, 8% de magnésie et 4,5% de $Na_2 O$) ou à base d'alumine, de zircone et de silice (par exemple une composition qui comprend, en poids, 50,6% d'alumine, 32,5% de zircone, 15,6% de silice et 1,1% de $Na_2O$). La composition est fondue selon les techniques habituelles couramment utilisées pour fondre ce type de matériau dans un four à arc électrique, un four à plasma ou un four à induction, puis coulé dans un moule, par exemple en utilisant la technique décrite dans le brevet français 2.088.185.

Les éléments de l'invention peuvent aussi être fabriqués par moulage d'une composition coulable du type béton réfractaire ou d'une barbotine, ou encore par pressage d'une composition appropriée.

La description qui va suivre faite en se référant au dessin fera bien comprendre l'invention.

La figure 1 est une vue en perspective d'une paroi d'un élément selon l'invention;

la figure 2 est une vue en coupe verticale de cette paroi;

la figure 3 est une vue en perspective d'un élément cruciforme selon l'invention comprenant quatre parois orthogonales telles que celles des figures 1 et 2;

les figures 4A, 1, 2, 3 à 4C, 1, 2, 3 illustrent diverses variantes de formes d'obstacles;

la figure 5 est une vue en perspective d'une paroi d'un autre élément selon l'invention comprenant des obstacles obliques;

la figure 6 est une vue en perspective d'un élément cruciforme selon l'invention comprenant quatre parois orthogonales pourvues d'obstacles disposés obliquement;

la figure 7 représente une variante de réalisation de l'élément de la figure 6; et

la figure 8 est une vue en perspective d'une variante de paroi d'un élément selon l'invention.

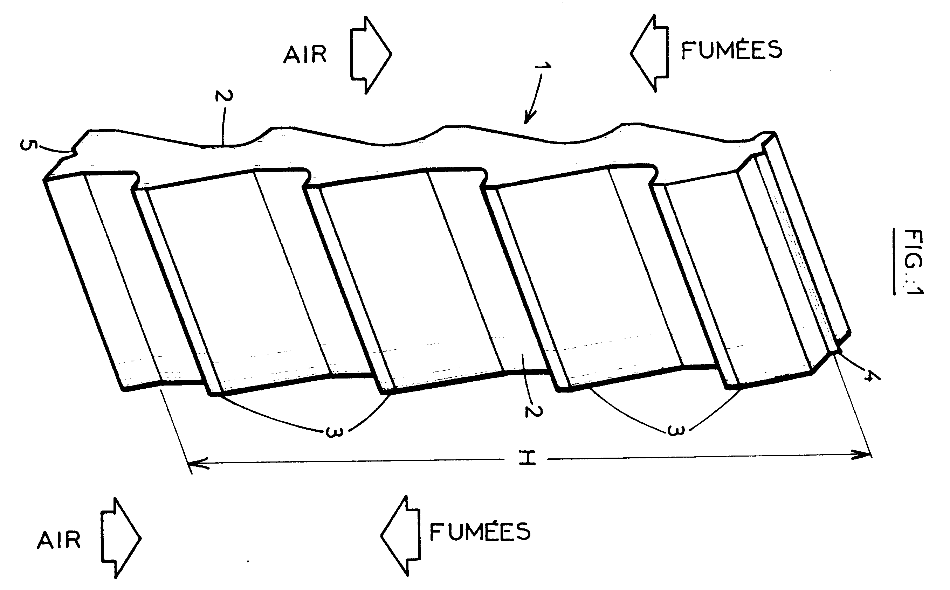

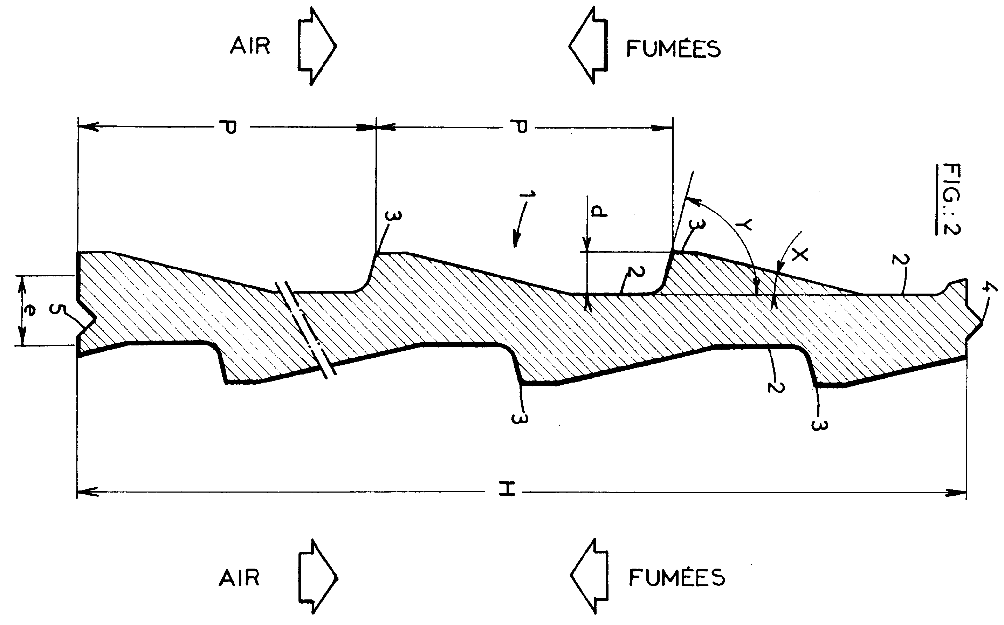

Sur les figures 1 et 2, on a représenté une paroi d'un élément selon l'invention. Cette paroi, désignée par la référence générale 1, de forme générale rectangulaire, présente une surface de base 2 sur laquelle sont érigés une pluralité d'obstacles 3 s'étendant horizontalement des deux côtés de la paroi et sur toute la largeur de chaque face. Chaque obstacle présente un décrochement (hauteur maximale) $\underline{d}$ par rapport à la surface de base. La distance séparant deux obstacles adjacents est référencée P. Chaque obstacle forme un angle $\underline{x}$ avec la surface de base de la paroi dans le sens prévu pour l'écoulement des fumées et un angle y avec la surface de base de la paroi dans le sens prévu pour l'écoulement de l'air à réchauffer. Dans le cas présent, on a $\underline{x} < \underline{y}$. H désigne la hauteur de la paroi. Les obstacles 3 présents sur un des côtés de la paroi sont décalés par rapport à ceux présents sur l'autre côté de la paroi, comme représenté. Par ailleurs, certains obstacles, situés à la partie supérieure ou inférieure de la paroi, sont incomplets, leur complément se trouvant sur la paroi qui sera disposée au-dessus ou en-dessous de ladite paroi dans l'empilage.

La paroi présente, en outre, à sa partie supérieure, une barrette 4 faisant saillie par rapport à la face supérieure de la paroi et, à sa partie inférieure, une rainure 5 de forme correspondante, dont l'utilité sera décrite ci-après.

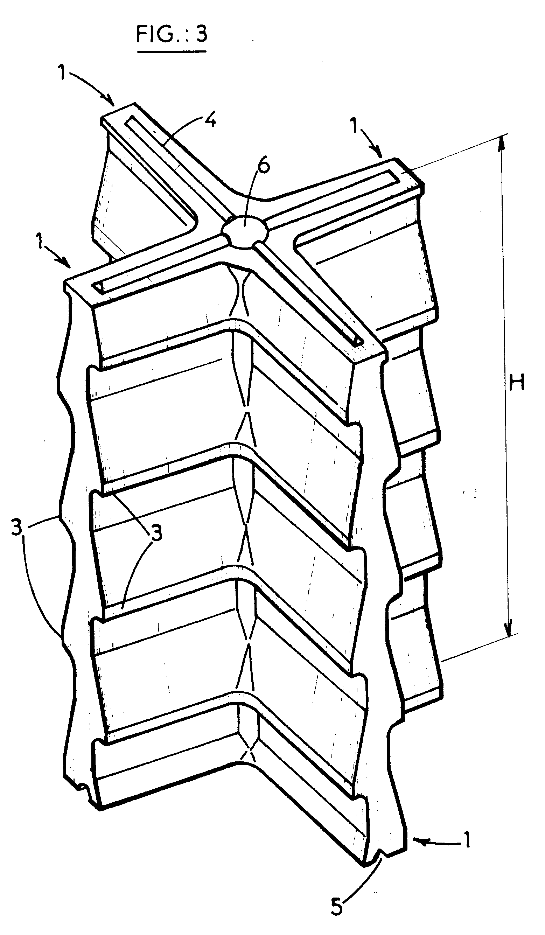

La figure 3 représente un élément cruciforme constitué de quatre parois 1, telles que décrites à propos des figures 1 et 2, solidaires d'une partie centrale de raccordement 6 et disposées orthogonalement deux à deux. Le rôle des barrettes 4 et rainures 5, dont la position respective peut d'ailleurs être inversée, est de faciliter, lors du montage du régénérateur, le réglage de l'espacement existant entre les divers éléments adjacents d'un étage donné de l'empilage, les éléments n'étant pas assujettis de façon fixe les uns contre les autres. Par ailleurs, l'emboîtement des barrettes d'un élément dans les rainures des éléments adjacents assure une bonne stabilité de l'ensemble des rangs. Il va de soi, cependant, que l'usage de ces barrettes et rainures n'est pas indispensable et qu'on pourrait leur substituer des moyens équivalents, ou même les supprimer.

Il est à noter aussi que, au voisinage des extrémités latérales libres des parois, les obstacles pourraient être amincies ( chanfreinées ) soit sur une seule face de chaque paroi, soit sur les deux faces, si désiré.

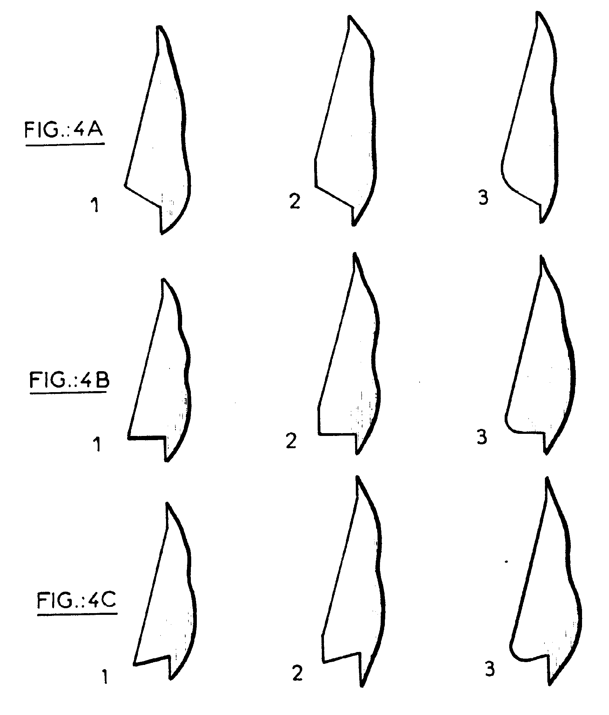

Sur les figures 4A, 1, 2, 3 à 4C, 1, 2, 3, on a représenté divers profils d'obstacles pouvant être substitués à celui des obstacles des figures 1 et 2 (dont le profil correspond à celui de la figure 4A, 2), ceci afin d'illustrer la grande diversité de profils d'obstacles utilisables.

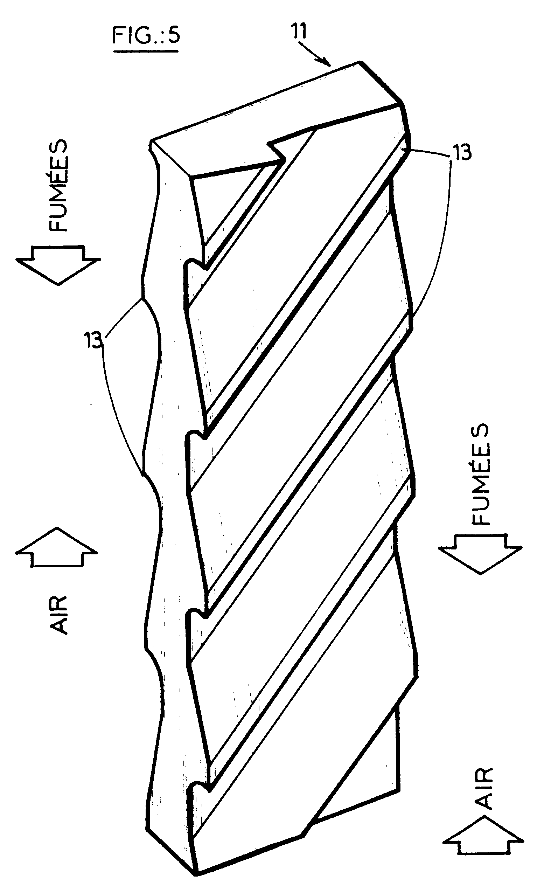

Sur la figure 5, on a représenté une paroi 11 pourvue d'obstacles 13 ayant un profil semblable à celui des obstacles de la paroi des figures 1 et 2, mais qui diffère de la paroi desdites figures par le fait que ces obstacles sont disposés obliquement selon une pente ascendante, au lieu d'être horizontaux.

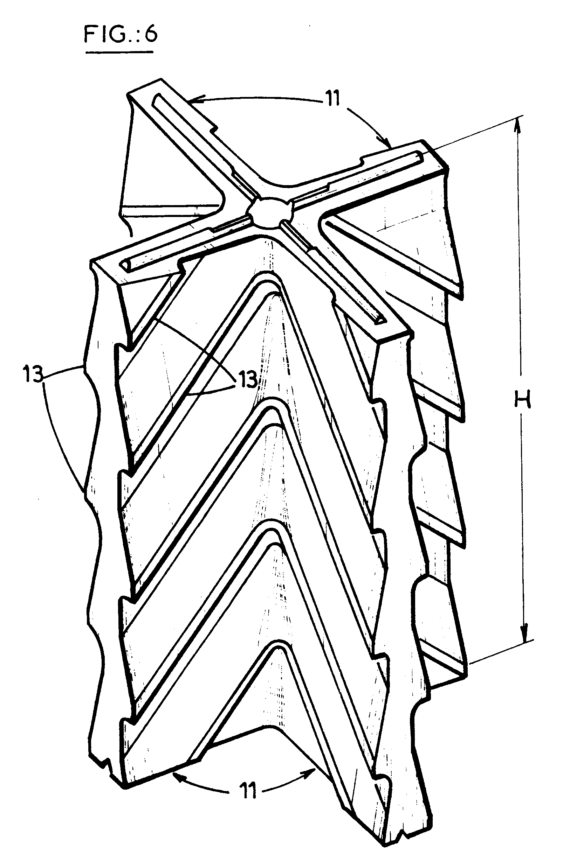

La figure 6 montre un élément cruciforme constitué de quatre parois pourvues d'obstacles disposés obliquement, comme illustré par la figure 5. Comme on le voit, les obstacles obliques des faces en regard de deux parois adjacentes forment des sortes de chevrons. Avec un tel élément, l'amélioration du transfert thermique est renforcée par la convergence des écoulements d'air vers la partie centrale de raccordement des parois.

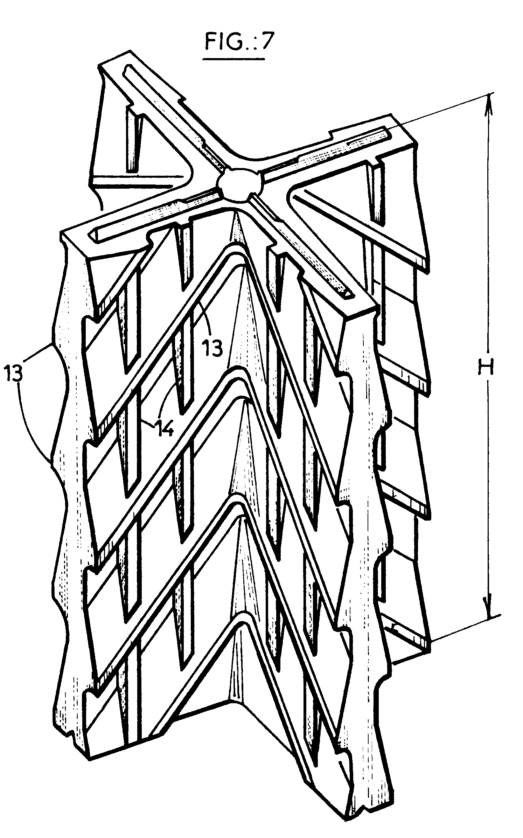

La figure 7 montre un élément dérivé de celui de la figure 6. Cet élément diffère de celui de la figure 6 en ce qu'il compte, en outre, des obstacles secondaires 14 orientés dans le sens vertical, s'étendant entre les obstacles obliques 13 adjacents. Ceci permet de tirer encore un meilleur parti sur le plan thermique de la portion de l'écoulement d'air se déplaçant obliquement le long des obstacles obliques. Les obstacles verticaux 14 jouent en effet pour cet écoulement oblique d'air le même rôle que les obstacles 13 pour l'écoulement d'air vertical. Les obstacles secondaires 14 répondent aux conditions générales énoncées pour les obstacles, si ce n'est que la distance séparant deux obstacles secondaires consécutifs doit être mesurée dans le sens horizontal et non dans le sens vertical.

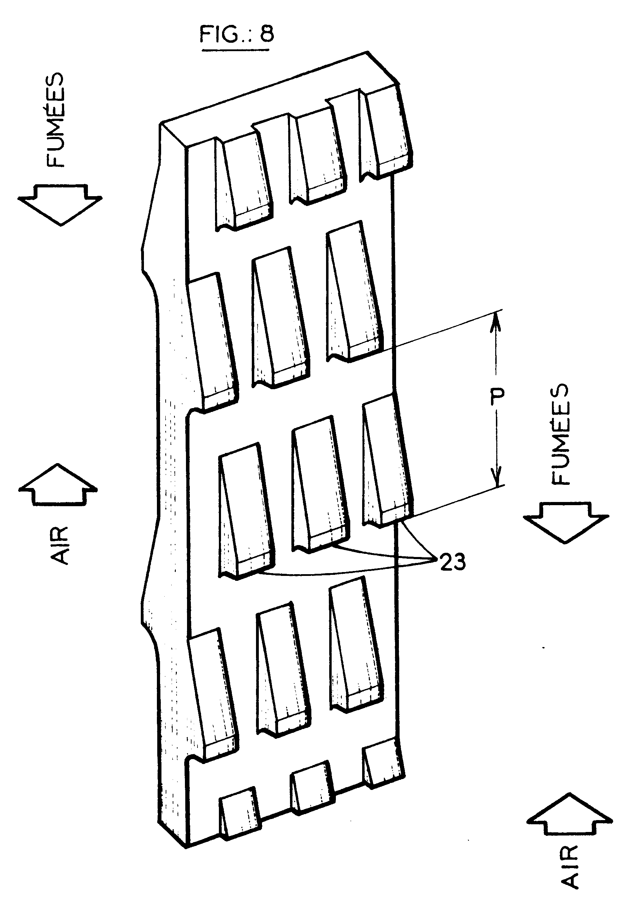

La figure 8 montre une paroi d'élément pourvue non plus d'obstacles s'étendant de façon continue sur toute la largeur de la paroi, mais présentant des discontinuités. Plus précisément, chaque obstacle 3 (figures 1 et 2) est remplacé, dans le mode de réalisation représenté, par trois obstacles 23 semblables présentant un profil tel que celui des obstacles des figures 1 et 2, les obstacles situés à un niveau donné de la paroi étant en outre décalés latéralement par rapport à ceux des niveaux immédiatement inférieur et supérieur.

Il va de soi que des modifications peuvent être apportées aux modes de réalisation qui viennent d'être décrits, notamment par substitution de moyens techniques équivalents, sans sortir pour cela du cadre de la présente invention.

## Revendications

1. Un élément céramique pour le garnissage de régénérateurs de fours de fusion du verre, ayant au moins une paroi verticale (1) dont l'épaisseur moyenne est d'au plus 40 mm, caractérisé par la présence, sur les faces opposées de cette paroi verticale, d'une pluralité d'obstacles (3, 13, 23) faisant partie intégrante de l'élément, le décrochement (d) des obstacles par rapport à la surface de base (2) de la paroi étant d'au moins 5 mm, le rapport de la distance (P) séparant deux obstacles consécutifs d'une face donnée dans le sens vertical audit décrochement étant compris entre 3 et 15, et l'angle $\underline{x}$ formé par l'obstacle avec la surface de base de chaque face de la paroi dans le sens prévu de passage des fumées et l'angle $\underline{y}$ formé par l'obstacle avec la surface de base de chaque face de la paroi dans le sens prévu de passage de l'air à réchauffer étant tels que $\underline{x}$ soit inférieur à $\underline{y}$, les obstacles sur une face de paroi verticale étant décalés dans le sens vertical par rapport aux obstacles sur l'autre face de cette paroi.

2. Un élément selon la revendication 1, caractérisé en ce que le décrochement est d'au moins 10 mm.

3. Un élément selon la revendication 1 ou 2, caractérisé en ce que ledit rapport est compris entre 5 et 10.

4. Un élément selon l'une quelconque des revendications 1 à 3, caractérisé en ce que les obstacles sont disposés horizontalement.

5. Un élément selon l'une quelconque des revendications 1 à 3, caractérisé en ce que les obstacles sont disposés obliquement.

6. Un élément selon la revendication 5, caractérisé en ce qu'il comporte en outre des obstacles secondaires verticaux (14) disposés entre les obstacles obliques adjacents.

7. Un élément selon l'une quelconque des revendications 1 à 6, caractérisé en ce que les obstacles s'étendent de façon continue sur la largeur de la paroi.

8. Un élément selon l'une quelconque des revendications 1 à 6, caractérisé en ce que les obstacles (23) n'occupent qu'une fraction seulement de la largeur de la paroi.

9. Un élément selon l'une quelconque des revendications 1 à 8, caractérisé en ce qu'il est constitué de quatre parois (1) disposées orthogonalement deux à deux et solidaires d'une partie centrale ( 6 ) de raccordement.

10. Régénérateur de fours de fusion du verre, caractérisé en ce que ses chambres de régénération comprennent un empilage d'éléments selon l'une quelconque des revendications 1 à 9.

## Patentansprüche

1. Keramisches Element zum Auskleiden von Regeneratoren von Glasschmelzöfen, mit mindestens einer vertikalen Wand (1), deren mittlere Dicke höchstens 40 mm beträgt, dadurch gekennzeichnet, daß auf den gegenüberliegenden Seiten dieser vertikalen Wand mehrere Hindernisse (3, 13 23) vorgesehen sind, die einen integralen Bestandteil des Elementes bilden, wobei die Höhe (d) der Hindernisse bezüglich der Basisfläche (2) der Wand mindestens 5 mm beträgt, das Verhältnis des Abstandes (P), der zwei aufeinanderfolgende Hindernisse einer Seite in vertikaler Richtung trennt, zu der besagten Höhe zwischen 3 und 15 liegt und der Winkel x, den das Hindernis mit der Basisfläche jeder Seite der Wand in Strömungsrichtung der Rauchgase einschließt, und der Winkel y, den das Hindernis mit der Basisfläche jeder Seite der Wand in Strömungsrichtung der zu erwärmenden Luft einschließt, derart sind, daß x kleiner ist als y, wobei die Hindernisse auf einer Seite der vertikalen Wand in vertikaler Richtung bezüglich den Hindernissen auf der anderen Seite dieser Wand versetzt sind.

2. Element nach Anspruch 1, dadurch gekennzeichnet, daß die besagte Höhe mindestens 10 mm beträgt.

3. Element nach Anspruch 1 oder 2, dadurch gekennzeichnet, daß das besagte Verhältnis zwischen 5 und 10 liegt.

4. Element nach einem der Ansprüche 1 bis 3, dadurch gekennzeichnet, daß die Hindernisse horizontal angeordnet sind.

5. Element nach einem der Ansprüche 1 bis 3, dadurch gekennzeichnet, daß die Hindernisse schräg angeordnet sind.

6. Element nach Anspruch 5, dadurch gekennzeichnet, daß es zusätzlich vertikale sekundäre Hindernisse (14) aufweist, die zwischen den benachbarten schrägen Hindernissen angeordnet sind.

7. Element nach einem der Ansprüche 1 bis 6, dadurch gekennzeichnet, daß die Hindernisse sich kontinuierlich über die Breite der Wand erstrecken.

8. Element nach einem der Ansprüche 1 bis 6, dadurch gekennzeichnet, daß die Hindernisse (23) nur einen Bruchteil der Dreite der Wand einnehmen.

9. Element nach einem der Ansprüche 1 bis 8, dadurch gekennzeichnet, daß es aus vier Wänden (1) besteht, die paarweise senkrecht zueinander angeordnet und mit einem zentralen Anschlußabschnitt (6) fest verbunden sind.

10. Regenerator für Glasschmelzöfen, dadurch gekennzeichnet, daß seine Reneratorkammern einen Stapel von Elementen nach einem der Ansprüche 1 bis 9 aufweisen.

ral connecting part (6).

10. Regenerator of glass melting furnaces, characterized in that its regenerator chambers comprise a chequerwork arrangement of elements according to any of claims 1 to 9.

**Claims**

1. A ceramic element for equipping regenerators of glass melting furnaces, having at least one vertical wall (1), the mean thickness of which is at the most 40 mm, characterized by the presence, on the opposite faces of this vertical wall, of a plurality of obstacles (3, 13, 23) forming an integral part of the element, the protrusion (d) of the obstacles relative to the base surface (2) of the wall being at least 5 mm, the ratio of the distance (P) separating two consecutive obstacles of a given face in the vertical direction to the said protrusion being comprised between 3 and 15, and the angle $\underline{x}$ formed by the obstacle with the base surface of each face of the wall in the given direction of movement of the fumes and the angle $\underline{y}$ formed by the obstacle with the base surface of each face of the wall in the given direction of movement of the air to be heated being such that $\underline{x}$ is less than $\underline{y}$, the obstacles on one face of the vertical wall being staggered in the vertical direction relative to the obstacles on the other face of this wall.

2. An element according to claim 1, characterized in that the protrusion is at least 10 mm.

3. An element according to claim 1 or 2, characterized in that said ratio is comprised between 5 and 10.

4. An element according to any of claims 1 to 3, characterized in that the obstacles are arranged horizontally.

5. An element according to any of claims 1 to 3, characterized in that the obstacles are arranged obliquely.

6. An element according to claim 5, characterized in that it comprises in addition vertical secondary obstacles (14) arranged between the adjacent oblique obstacles.

7. An element according to any of claims 1 to 6, characterized in that the obstacles extend continously over the width of the wall.

8. An element according to any of claims 1 to 6, characterized in that the obstacles (23) occupy only a fraction of the width of the wall.

9. An element according to any of claims 1 to 8, characterized in that it consists of four walls (1) arranged orthogonally in pairs an integral with a cent-

# FIG.:1

FIG.: 2

## FIG.: 3

FIG.:4A

1  2  3

FIG.:4B

1  2  3

FIG.:4C

1  2  3

FIG.:5

FIG.:6

FIG.:7

FIG.: 8